# EUROPEAN PATENT SPECIFICATION

(11) **EP 4 475 215 B1**
(45) Date of publication and mention of the grant of the patent: **18.11.2026**
(21) Application number: 24178933.8
(22) Date of filing: 29.05.2024
(51) Int. Cl.: H01M 4/136, H01M 4/02

(54) **COMPOSITE POSITIVE ELECTRODE SHEET WITH HIGH COMPACTED DENSITY, METHOD FOR PREPARING THE SAME, AND ENERGY STORAGE DEVICE**
ZUSAMMENGESETZTE POSITIVELEKTRODENFOLIE MIT HOHER VERDICHTETER DICHTE, VERFAHREN ZU IHRER HERSTELLUNG UND ENERGIESPEICHERVORRICHTUNG
FEUILLE D'ÉLECTRODE POSITIVE COMPOSITE À HAUTE DENSITÉ COMPACTÉE, SON PROCÉDÉ DE PRÉPARATION ET DISPOSITIF DE STOCKAGE D'ÉNERGIE

(30) Priority: 09.06.2023 CN 202310681756
(43) Date of publication of application: 11.12.2024
(73) Proprietor: Hithium Tech HK Limited, Hong Kong (HK)
(72) Inventor: XIE, Yanchong, Xiamen, 361100 (CN)
(74) Representative: RGTH

(56) References cited:
- CN-A- 114 400 322
- CN-A- 114 843 438
- KR-A- 20140 142 576

## Description

### Technical Field

The present application relates to the field of energy storage, and in particular, to a composite positive electrode sheet with high compacted density for energy storage devices, a method for preparing the same, and energy storage devices comprising the same.

### Background Art

Along with the progress of the times, high energy density is increasingly pursued for lithium batteries. At present, the main positive electrode material used in batteries is lithium iron phosphate, which has a theoretical gram capacity of only 170 mAh/g, which is relatively low as a positive electrode material. Therefore, it is expected to develop a positive electrode material with a high theoretical gram capacity or a high operating voltage in order to develop lithium batteries with high energy densities. Lithium iron manganese phosphate is similar to lithium iron phosphate in the safety property and theoretical gram capacity, but has an energy density which is 20% higher than that of lithium iron phosphate because of its voltage platform at 4.1V.

The method currently used in scientific research or commercially for preparing a positive electrode sheet from lithium iron manganese phosphate comprises: (1) premixing of raw materials: adding main raw materials into a mixer for stirring and premixing to obtain a mixture; (2) wetting: stirring to disperse the mixture with an organic solvent under vacuum; (3) high speed dispersing: adding an organic solvent and performing high-speed stirring to disperse under vacuum to obtain a mixed slurry; (4) sieving: sieving the mixed slurry prepared in the high-speed dispersing step to remove large particles to obtain an positive electrode slurry; (5) coating: coating the positive electrode slurry onto an aluminum foil, and then drying thoroughly to form a coating layer, thereby obtaining the positive electrode sheet.

CN 114 843 438 A discloses an electrode sheet comprising a current collector 11, an active material layer 12 and several protruding units 13 arranged on the surface of the active material layer 12 away from the current collector 11 with intervals.

KR 2014 0142576 A discloses an electrode for a secondary battery having through holes in the active material layer.

CN 114 400 322 A discloses a positive electrode active material, comprising, in a mixed form, a first active material and a second active material which have different particle sizes.

### Summary

In a first aspect, the present application provides a composite positive electrode sheet for energy storage devices, comprising a current collector, a coating layer and inserts, wherein:
the inserts are inserted into the coating layer, and the inserts have a width D along a length direction of the composite positive electrode sheet ranging from 10 µm to 20 µm, a distance L between two adjacent inserts satisfying L ≤ 50 µm, and a depth h of the portion of each insert inserted into the coating layer ranging from 30 µm to 50 µm taking the outer surface of the coating layer facing away from the current collector as a reference plane;
the inserts have a larger particle size than the coating layer;
the coating layer and the inserts are both made from lithium iron manganese phosphate; and
the composite positive electrode sheet has a compacted density of larger than or equal to 2.3 g/cm³.

In another aspect, the present application provides a method for preparing the composite positive electrode sheet of the present application, comprising the steps of:
(1) preparing a coating layer: coating a first positive electrode slurry on a surface of a current collector to form a coating layer; and
(2) preparing inserts: injecting a second positive electrode slurry into the coating layer with a syringe,
wherein the second positive electrode slurry has a larger particle size than the first positive electrode slurry.

In another aspect, the present application provides an energy storage device, comprising the composite positive electrode sheet of the present application.

### Brief Description of Drawings

Fig. 1 shows a schematic diagram of the preparation process of the composite positive electrode sheet of the present application.
Fig. 2 shows the morphology of lithium iron manganese phosphate particles used in the present application, in which a) is the morphology of the particles in the coating layer; b) is the morphology of the particles in the inserts.
Fig. 3 shows the particle size distribution of lithium iron manganese phosphate particles used in the present application.
Fig. 4 shows the distributions of particles and coatings in a partial cross-section of the composite positive electrode sheet prepared in Example 1 of the present application.

### Detailed Description

In the present application, a new type of composite positive electrode sheet with a high compacted density is designed.

In a first aspect, the present application provides a composite positive electrode sheet for energy storage devices, comprising a current collector, a coating layer and inserts, wherein:
the inserts are inserted into the coating layer, and the inserts have a width D along a length direction of the composite positive electrode sheet ranging from 10 µm to 20 µm, a distance L between two adjacent inserts satisfying L ≤ 50 µm, and a depth h of the portion of each insert inserted into the coating layer ranging from 30 µm to 50 µm taking the outer surface of the coating layer facing away from the current collector as a reference plane;
the inserts have a larger particle size than the coating layer;
the coating layer and the inserts are both made from lithium iron manganese phosphate; and
the composite positive electrode sheet has a compacted density of larger than or equal to 2.3 g/cm³.

In a specific embodiment, the current collector is aluminum foil, which may have a thickness ranging from 10 µm to 20 µm.

In a specific embodiment, the coating layer has a thickness ranging from 70 µm to 120 µm.

In a specific embodiment, the coating layer has a mean particle size Dv50 ranging from 0.6 µm to 0.8 µm, and the inserts have a mean particle size Dv50 ranging from 1.1 µm to 1.3 µm.

In a specific embodiment, the inserts have a width D along a length direction of the composite positive electrode sheet ranging from 14 µm to 18 µm, or about 16 µm.

In a specific embodiment, the distance L between two adjacent inserts is less than or equal to 30 µm.

In a specific embodiment, the depth h of the portion of each insert inserted into the coating layer is about 45 µm, taking the outer surface of the coating layer facing away from the current collector as a reference plane.

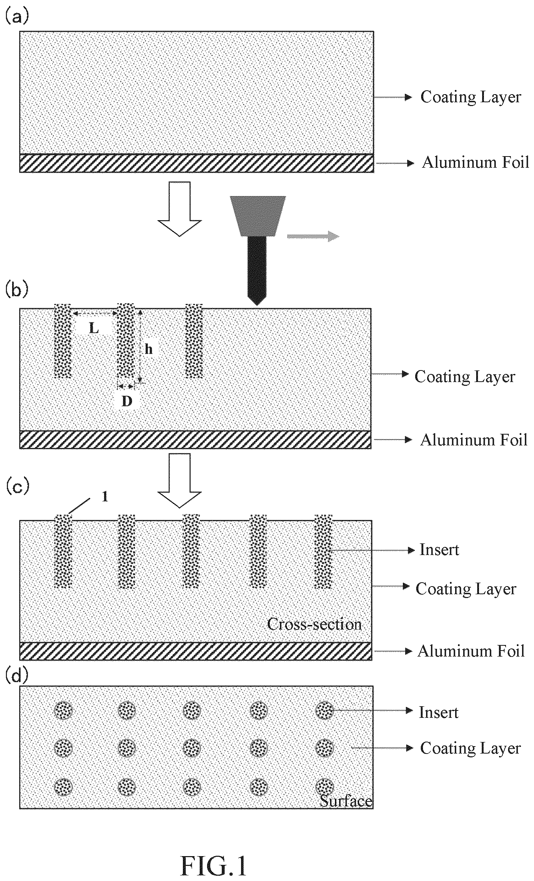

In a specific embodiment, as shown in graph c) of Fig. 1 by reference number 1, the ends of the inserts facing away from the current collector form protrusions on the outer surface of the coating layer facing away from the current collector. The protrusions protrude relative to the outer surface of the coating layer facing away from the current collector, and a plurality of protrusions are distributed in an array.

In another aspect, the present application provides a method for preparing the composite positive electrode sheet of the present application. The method includes the steps of:
(1) preparing a coating layer: coating a first positive electrode slurry on a surface of a current collector to form a coating layer; and
(2) preparing inserts: injecting a second positive electrode slurry into the coating layer with a syringe,
wherein the second positive electrode slurry has a larger particle size than the first positive electrode slurry.

In a specific embodiment, the method of the present application further includes a post-treatment step. In the post-treatment step, the composite positive electrode sheet obtained in step (2) is pressed on a press machine, so that the compacted density is larger than or equal to 2.3 g/cm³.

A specific process for preparing the composite positive electrode sheet of the present application is shown in Fig. 1. Accordingly, in a specific embodiment, the composite positive electrode sheet of the present application is prepared as follows:
1. Preparation of a coating layer (referring to graph a) in Fig. 1)
   (1) Corresponding amounts of lithium iron manganese phosphate (mean particle size Dv50 ranging from 0.6 to 0.8 µm), conductive carbon black and polyvinylidene fluoride are weighed and added into a mixing tank according to a mass ratio of 95%:2%:3%, followed by adding an appropriate amount of N-methylpyrrolidone (NMP). The mixture is stirred for 6 h to give a uniform slurry with an appropriate viscosity.
   (2) The slurry is evenly coated on an aluminum foil by extrusion coating to form a coating layer, which is subjected to rapid pre-shaping in an oven (70 to 90°C, 3 to 5 min).
2. Preparation of inserts (referring to graph b) in Fig. 1)
   (1) Corresponding amounts of lithium iron manganese phosphate (mean particle size Dv50 ranging from 1.1 to 1.3 µm), conductive carbon black and polyvinylidene fluoride are weighed and added into a mixing tank according to a mass ratio of 95%:2%:3%, followed by adding an appropriate amount of N-methylpyrrolidone (NMP). The mixture is stirred for 6 h to give a uniform slurry with an appropriate viscosity.
   (2) The slurry is loaded into a special device such as a syringe. The slurry is inserted into the coating layer with the syringe, while controlling the injection volume, movement displacement, frequency, etc. The width of the inserts along a length direction of the composite positive electrode sheet is illustrated as D. The distance between two adjacent inserts is illustrated as L. Taking the outer surface of the coating layer facing away from the current collector as a reference plane, the depth of the portion of each insert inserted into the coating layer is illustrated as h. After sufficient drying in an oven, a composite positive electrode sheet is formed.
   The cross-section and the surface of the composite positive electrode sheet obtained in the present application are respectively shown in graphs c) and d) in Fig. 1.
3. Post-treatment

The composite positive electrode sheet obtained in step 2 is placed on a press machine and pressed at a pressure of 30 MPa, so that the compacted density of the composite positive electrode sheet is larger than or equal to 2.3 g/cm³.

In a specific embodiment, the ends of the inserts form protrusions on the surface of the positive electrode sheet. By forming a regular array of protrusions on the outermost surface of the positive electrode sheet, a tiny gap is formed between the positive electrode sheet and the separator after the positive electrode sheet is rolled into an electrode assembly. This facilitates the flow of the electrolyte between the positive electrode sheet and the separator, reduces the fluid resistance of the electrolyte flow, and makes the electrolyte infiltration more effective and more uniform.

In another aspect, the present application provides an energy storage device, which comprises the composite positive electrode sheet of the present application.

In an embodiment of the present application, the energy storage device is a lithium-ion battery.

In a specific embodiment, the lithium-ion battery of the present application is prepared as follows:
(1) Corresponding amounts of artificial graphite, conductive carbon black and carboxymethyl cellulose sodium are weighed and added into a mixing tank according to a mass ratio of 95%:2.5%:2.5%, followed by adding an appropriate amount of deionized water. The mixture is stirred for 5 h to give a uniform slurry with an appropriate viscosity. The slurry is coated onto a copper foil with a thickness of 10 µm, placed in a vacuum oven, and dried at 150°C for 15 h to give a negative electrode sheet.
(2) The negative electrode sheet is placed into a press machine and pressed. A negative electrode disc of Φ 18 mm is cut with a puncher.
(3) A positive electrode disc of Φ 15 mm is cut with a puncher from the composite positive electrode sheet of the present application.
(4) The positive electrode disc and the negative electrode disc are placed into a glove box which has been filled with an argon protective atmosphere for battery assembly, using a solution of 1 mol/L lithium hexafluorophosphate dissolved in a mixed solvent of ethylene carbonate and diethyl carbonate with a molar ratio of 1:1 as the electrolyte. The positive electrode disc, the negative electrode disc, a polyethylene separator and other components are assembled together, followed by injection of the electrolyte, thereby obtaining the lithium-ion battery.

The technical solution of the present application will be further described in detail below with reference to specific examples.

### Preparation of the composite positive electrode sheet

Using the process shown in Fig. 1, composite positive electrode sheets were prepared in the following examples and comparative examples.

### Example 1

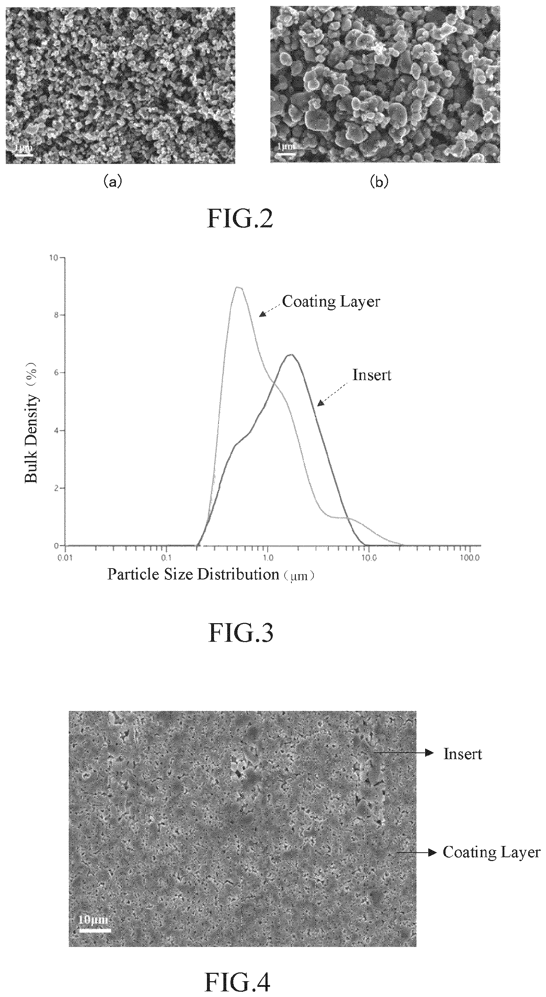

1. Preparation of a coating layer
   (1) Corresponding amounts of lithium iron manganese phosphate, conductive carbon black and polyvinylidene fluoride were weighed and added into a mixing tank according to a mass ratio of 95%:2%:3%, followed by adding an appropriate amount of N-methylpyrrolidone (NMP). The mixture was stirred for 6 h to give a uniform slurry with an appropriate viscosity. The morphology of the lithium iron manganese phosphate particles used is shown in graph a) in Fig. 2, and the mean particle size Dv50 is 0.6 to 0.8 µm.
   (2) The slurry is evenly coated on an aluminum foil by extrusion coating to form a coating layer, which is subjected to rapid pre-shaping in an oven (70 to 90°C, 3 to 5 min). The coating layer has a thickness of about 70 µm. The particle size distribution of lithium iron manganese phosphate particles in the coating layer is shown in Fig. 3.
2. Preparation of inserts
   (1) Corresponding amounts of lithium iron manganese phosphate, conductive carbon black and polyvinylidene fluoride were weighed and added into a mixing tank according to a mass ratio of 95%:2%:3%, followed by adding an appropriate amount of N-methylpyrrolidone (NMP). The mixture was stirred for 6 h to give a uniform slurry with an appropriate viscosity. The morphology of the lithium iron manganese phosphate particles used is shown in graph b) in Fig. 2, and the mean particle size Dv50 is 1.1 to 1.3 µm.
   (2) The slurry was loaded into a syringe. The slurry was inserted into the coating layer with the syringe, while controlling the injection volume, movement displacement, frequency, etc., to form the inserts. The width D of the inserts along a length direction of the composite positive electrode sheet was about 10 µm. The distance L between two adjacent inserts was about 30 µm. Taking the outer surface of the coating layer facing away from the current collector as a reference plane, the depth h of the portion of each insert inserted into the coating layer was about 30 µm.
   After sufficient drying in an oven, a composite positive electrode sheet was formed, in which the particle size distribution of lithium iron manganese phosphate particles in the inserts is shown in Fig. 3.
   The distributions of particles and coatings in a partial cross-section of the composite positive electrode sheet are shown in Fig. 4.
3. Post-treatment
   The aforementioned composite positive electrode sheet was placed on a press machine and pressed at a pressure of 30 MPa, so that the compacted density of the composite positive electrode sheet was 2.3 g/cm³.

### Example 2

The same method and materials as in Example 1 were used to prepare a composite positive electrode sheet, except that the width D of the inserts along a length direction of the composite positive electrode sheet was 12 µm.

### Example 3

The same method and materials as in Example 1 were used to prepare a composite positive electrode sheet, except that the width D of the inserts along a length direction of the composite positive electrode sheet was 14 µm.

### Example 4

The same method and materials as in Example 1 were used to prepare a composite positive electrode sheet, except that the width D of the inserts along a length direction of the composite positive electrode sheet was 16 µm.

### Example 5

The same method and materials as in Example 1 were used to prepare a composite positive electrode sheet, except that the width D of the inserts along a length direction of the composite positive electrode sheet was 18 µm.

### Example 6

The same method and materials as in Example 1 were used to prepare a composite positive electrode sheet, except that the width D of the inserts along a length direction of the composite positive electrode sheet was 20 µm.

### Example 7

The same method and materials as in Example 1 were used to prepare a composite positive electrode sheet, except that the distance L between two adjacent inserts was 40 µm.

### Example 8

The same method and materials as in Example 1 were used to prepare a composite positive electrode sheet, except that the distance L between two adjacent inserts was 50 µm.

### Example 9

The same method and materials as in Example 1 were used to prepare a composite positive electrode sheet, except that the depth h of the portion of each insert inserted into the coating layer was 35 µm.

### Example 10

The same method and materials as in Example 1 were used to prepare a composite positive electrode sheet, except that the depth h of the portion of each insert inserted into the coating layer was 40 µm.

### Example 11

The same method and materials as in Example 1 were used to prepare a composite positive electrode sheet, except that the depth h of the portion of each insert inserted into the coating layer was 45 µm.

### Example 12

The same method and materials as in Example 1 were used to prepare a composite positive electrode sheet, except that the depth h of the portion of each insert inserted into the coating layer was 50 µm.

### Comparative Example 1

### 1. Preparation of a coating layer

The same method and materials as in step 1 of Example 1 were used to prepare a coating layer on an aluminum foil, thereby forming a composite positive electrode sheet with a coating layer.

### 2. Post-treatment

The aforementioned composite positive electrode sheet was placed on a press machine and pressed at a pressure of 30 MPa, so that the compacted density of the positive electrode sheet was 2.1 g/cm³.

### Comparative Example 2

The same method and materials as in Comparative Example 1 were used to prepare a composite positive electrode sheet, except that the compacted density of the positive electrode sheet was 2.2 g/cm³.

### Comparative Example 3

The same method and materials as in Comparative Example 1 were used to prepare a composite positive electrode sheet, except that the compacted density of the positive electrode sheet was 2.3 g/cm³.

### Preparation of lithium-ion batteries

Lithium-ion batteries were prepared as follows using the composite positive electrode sheets prepared in the above examples and comparative examples.
(1) Corresponding amounts of artificial graphite, conductive carbon black and carboxymethyl cellulose sodium were weighed and added into a mixing tank according to a mass ratio of 95%:2.5%:2.5%, followed by adding an appropriate amount of deionized water. The mixture was stirred for 5 h to give a uniform slurry with an appropriate viscosity. The slurry was coated onto a copper foil with a thickness of 10 µm, placed in a vacuum oven, and dried at 150°C for 15 h to give a negative electrode sheet.
(2) The negative electrode sheet was placed into a press machine and pressed. A negative electrode disc of Φ 18 mm was cut with a puncher.
(3) A positive electrode disc of Φ 15 mm was cut with a puncher from one of the composite positive electrode sheets prepared in the above examples and comparative examples.
(4) The positive electrode disc and the negative electrode disc were placed into a glove box which has been filled with an argon protective atmosphere for battery assembly, using a solution of 1 mol/L lithium hexafluorophosphate dissolved in a mixed solvent of ethylene carbonate and diethyl carbonate with a molar ratio of 1:1 as the electrolyte. The positive electrode disc, the negative electrode disc, a polyethylene separator and other components were assembled together, followed by injection of the electrolyte, thereby producing the lithium-ion battery.

### Test Methods

The composite positive electrode sheets or the lithium-ion batteries produced above were subjected to the following tests.

### 1) Dv50 of the positive electrode material

A laser diffraction particle size distribution measuring instrument (Malvern Mastersizer 3000) was used to measure the particle size distribution according to the particle size distribution laser diffraction method illustrated in GB/T19077-2016 to give Dv50 values.

### 2) Rate discharge capacity

At 25°C, a lithium battery was charged to 4.3V at a rate of 0.5C, and then discharged to 3V at a rate of 0.5C, and the discharge capacity under these conditions was recorded as 0.5C discharge capacity. The lithium battery was then charged to 4.3V at a rate of 1C, and then discharged to 2.5V at a rate of 1C, and the discharge capacity under these conditions was recorded as 1C discharge capacity.

### 3) Cycling performance

At 25°C, a lithium battery was charged to 4.3V at a rate of 1C, and then discharged to 2.5V at a rate of 1C. Taking the capacity of the first cycle as the initial capacity, the retention rate value was obtained by dividing the capacity of the 200th cycle by the initial capacity.

**Table 1: Results of lithium-ion battery electrochemical testing**

| Battery number | 0.5C discharge mAh/g | 1C discharge mAh/g | Capacity retention rate % |
|---|---|---|---|
| Example 1 | 135.5 | 123.1 | 82.4 |
| Example 2 | 137.6 | 125.3 | 83.1 |
| Example 3 | 139.3 | 128.1 | 83.8 |
| Example 4 | 142.4 | 130.2 | 85.2 |
| Example 5 | 139.2 | 128.8 | 84.2 |
| Example 6 | 137.8 | 125.7 | 83.6 |
| Example 7 | 135.0 | 122.8 | 82.2 |
| Example 8 | 133.5 | 121.3 | 81.7 |
| Example 9 | 136.7 | 124.3 | 82.9 |
| Example 10 | 138.2 | 125.3 | 83.4 |
| Example 11 | 140.2 | 127.3 | 84.5 |
| Example 12 | 138.5 | 125.0 | 83.6 |
| Comparative Example 1 | 136.5 | 123.4 | 82.1 |
| Comparative Example 2 | 131.6 | 120.5 | 81.5 |
| Comparative Example 3 | 127.4 | 116.5 | 79.8 |

### Data analysis:

It can be seen from Comparative Examples 1, 2 and 3 in Table 1 that increasing the compacted density of the composite positive electrode sheet will lead to increased degree of squeeze between the particles, thereby making the voidage smaller. Consequently, the liquid holding capacity of the positive electrode sheet becomes worse, which directly deteriorates the electrochemical performances of the lithium battery.

It can be seen from Example 3 and Comparative Example 1 in Table 1 that, on the basis that the compacted density of the positive electrode sheet is 2.3 g/cm³, the specially distributed inserts designed in the present application are beneficial for the electrolyte to infiltrate into the positive electrode sheet, leading to better electrochemical performances of the lithium battery.

It can be seen from Examples 1, 2, 3, 4, 5 and 6 in Table 1 that when the width D of the inserts along a length direction of the composite positive electrode sheet gradually increases (from 10 µm to 20 µm), the electrochemical performances of the lithium batteries first increase and then decrease. The reason is that when the insert is too large, the proportion of large particles is too high, causing insufficient realization of the material properties. Therefore, in the method for preparing the composite positive electrode sheet of the present application, the optimal width D of the inserts along a length direction of the composite positive electrode sheet is about 16 µm.

It can be seen from Examples 1, 7 and 8 in Table 1 that when the distance L between two adjacent inserts increases (from 30 µm to 50 µm), the number of channels for electrolyte infiltration decreases, which worsens the electrochemical performances of the lithium battery. Therefore, in the method for preparing the composite positive electrode sheet of the present application, the distance L between two adjacent inserts is less than or equal to 30 µm.

It can be seen from Examples 1, 9, 10, 11 and 12 in Table 1 that when the depth h of the portion of each insert inserted into the coating layer gradually increases (from 30 µm to 50 µm), the electrochemical performances of the lithium batteries first increase and then decrease for the same reason as indicated above. Therefore, in the method for preparing the composite positive electrode sheet of the present application, the optimal depth h of the portion of each insert inserted into the coating layer is about 45 µm.

## Claims

1. A composite positive electrode sheet, **characterized in that** the composite positive electrode sheet comprises a current collector, a coating layer and a plurality of inserts, the coating layer being arranged on an outer surface of the current collector, wherein
the inserts are inserted in the coating layer, and the inserts have a width D along a length direction of the composite positive electrode sheet ranging from 10 µm to 20 µm, a distance L between two adjacent inserts satisfying L ≤ 50 µm, and a depth h of the portion of each insert inserted into the coating layer ranging from 30 µm to 50 µm taking the outer surface of the coating layer facing away from the current collector as a reference plane;
the inserts have a larger particle size than the coating layer;
the coating layer and the inserts are both made from lithium iron manganese phosphate; and
the composite positive electrode sheet has a compacted density of larger than or equal to 2.3 g/cm³.

2. The composite positive electrode sheet according to claim 1, wherein the coating layer has a thickness ranging from 70 µm to 120 µm.

3. The composite positive electrode sheet according to any one of claims 1 to 2, wherein the coating layer has a mean particle size Dv50 ranging from 0.6 µm to 0.8 µm, and the inserts have a mean particle size Dv50 ranging from 1.1 µm to 1.3 µm.

4. The composite positive electrode sheet according to any one of claims 1 to 3, wherein the inserts have a width D along a length direction of the composite positive electrode sheet ranging from 14 µm to 18 µm.

5. The composite positive electrode sheet according to any one of claims 1 to 4, wherein the inserts have a width D along a length direction of the composite positive electrode sheet of about 16 µm.

6. The composite positive electrode sheet according to any one of claims 1 to 5, wherein the distance L between two adjacent inserts is less than or equal to 30 µm.

7. The composite positive electrode sheet according to any one of claims 1 to 6, wherein the depth h of the portion of each insert inserted into the coating layer is about 45 µm, taking the outer surface of the coating layer facing away from the current collector as a reference plane.

8. A method for preparing the composite positive electrode sheet according to any one of claims 1 to 7, **characterized in that** the method comprises the steps of:
(1) preparing a coating layer: coating a first positive electrode slurry on a surface of a current collector to form a coating layer; and
(2) preparing inserts: injecting a second positive electrode slurry into the coating layer with a syringe;
wherein the second positive electrode slurry has a larger particle size than the first positive electrode slurry.

9. The method according to claim 8, further comprising a post-treatment step, wherein the post-treatment step comprises pressing the composite positive electrode sheet obtained in step (2) on a press machine, so that the compacted density is larger than or equal to 2.3 g/cm³.

10. The method according to claim 8 or 9, wherein the ends of the inserts facing away from the current collector form protrusions on the surface of the outer surface of the coating layer facing away from the current collector.

11. An energy storage device, **characterized in that** the energy storage device comprises the composite positive electrode sheet according to any one of claims 1 to 7.

## Patentansprüche

1. Verbund-Anodenfolie, **dadurch gekennzeichnet, dass** die Verbund-Anodenfolie einen Stromkollektor, eine Beschichtungsschicht und eine Vielzahl von Einsätzen umfasst, wobei die Beschichtungsschicht auf einer Außenfläche des Stromkollektors angeordnet ist, wobei
die Einsätze in die Beschichtungsschicht eingesetzt sind, und die Einsätze entlang einer Längsrichtung der Verbund-Anodenfolie eine Breite D im Bereich von 10 µm bis 20 µm, einen Abstand L zwischen zwei benachbarten Einsätzen, der die Bedingung L ≤ 50 µm erfüllt, und eine Tiefe h des in die Beschichtungsschicht eingesetzten Bereichs jedes Einsatzes im Bereich von 30 µm bis 50 µm aufweisen, wobei die vom Stromkollektor abgewandte Außenfläche der Beschichtungsschicht als eine Bezugsebene dient;
die Einsätze eine größere Partikelgröße aufweisen als die Beschichtungsschicht;
sowohl die Beschichtungsschicht als auch die Einsätze aus Lithium-Eisen-Mangan-Phosphat bestehen; und
die Verbund-Anodenfolie eine verdichtete Dichte aufweist, die größer oder gleich 2,3 g/cm³ ist.

2. Verbund-Anodenfolie gemäß Anspruch 1, wobei die Beschichtungsschicht eine Dicke im Bereich von 70 µm bis 120 µm aufweist.

3. Verbund-Anodenfolie gemäß einem der Ansprüche 1 bis 2, wobei die Beschichtungsschicht eine mittlere Partikelgröße Dv50 im Bereich von 0,6 µm bis 0,8 µm aufweist und die Einsätze eine mittlere Partikelgröße Dv50 im Bereich von 1,1 µm bis 1,3 µm aufweisen.

4. Verbund-Anodenfolie gemäß einem der Ansprüche 1 bis 3, wobei die Einsätze eine Breite D entlang einer Längsrichtung der Verbund-Anodenfolie im Bereich von 14 µm bis 18 µm aufweisen.

5. Verbund-Anodenfolie gemäß einem der Ansprüche 1 bis 4, wobei die Einsätze eine Breite D entlang einer Längsrichtung der Verbund-Anodenfolie von etwa 16 µm aufweisen.

6. Verbund-Anodenfolie gemäß einem der Ansprüche 1 bis 5, wobei der Abstand L zwischen zwei benachbarten Einsätzen kleiner oder gleich 30 µm ist.

7. Verbund-Anodenfolie gemäß einem der Ansprüche 1 bis 6, wobei die Tiefe h des in die Beschichtungsschicht eingesetzten Bereichs jedes Einsatzes etwa 45 µm beträgt, wobei die vom Stromkollektor abgewandte Außenfläche der Beschichtungsschicht als eine Bezugsebene dient.

8. Verfahren zur Herstellung der Verbund-Anodenfolie gemäß einem der Ansprüche 1 bis 7, **dadurch gekennzeichnet, dass** das Verfahren die folgenden Schritte umfasst:
(1) Herstellen einer Beschichtungsschicht: Aufbringen einer ersten Anodenaufschlämmung auf eine Oberfläche eines Stromkollektors, um eine Beschichtungsschicht auszubilden; und
(2) Herstellen von Einsätzen: Einspritzen einer zweiten Anodenaufschlämmung mit einer Spritze in die Beschichtungsschicht;
wobei die zweite Anodenaufschlämmung eine größere Partikelgröße aufweist als die erste Anodenaufschlämmung.

9. Verfahren gemäß Anspruch 8, ferner umfassend einen Nachbehandlungsschritt, wobei der Nachbehandlungsschritt ein Pressen der in Schritt (2) erhaltenen Verbund-Anodenfolie auf einer Pressmaschine umfasst, so dass die verdichtete Dichte größer oder gleich 2,3 g/cm³ ist.

10. Verfahren gemäß Anspruch 8 oder 9, wobei die vom Stromkollektor abgewandten Enden der Einsätze Vorsprünge auf der Oberfläche der vom Stromkollektor abgewandten Außenseite der Beschichtungsschicht ausbilden.

11. Energiespeichervorrichtung, **dadurch gekennzeichnet, dass** die Energiespeichervorrichtung die Verbund-Anodenfolie gemäß einem der Ansprüche 1 bis 7 umfasst.

## Revendications

1. Feuille d'électrode positive composite, **caractérisée en ce que** ladite feuille d'électrode positive composite comprend un collecteur de courant, une couche de revêtement et une pluralité d'inserts, la couche de revêtement étant disposée sur une surface extérieure du collecteur de courant, dans laquelle
les inserts sont insérés dans la couche de revêtement, et les inserts présentent une largeur D dans un sens de la longueur de la feuille d'électrode positive composite comprise entre 10 µm et 20 µm, une distance L entre deux inserts adjacents satisfaisant L ≤ 50 µm, et une profondeur h de la partie de chaque insert insérée dans la couche de revêtement comprise entre 30 µm et 50 µm, en prenant comme plan de référence la surface extérieure de la couche de revêtement opposée au collecteur de courant ;
les inserts ont une taille de particules supérieure à celle de la couche de revêtement ;
la couche de revêtement et les inserts sont tous deux constitués de phosphate de lithium, de fer et de manganèse ; et
la feuille d'électrode positive composite présente une densité compactée supérieure ou égale à 2,3 g / cm³.

2. Feuille d'électrode positive composite selon la revendication 1, dans laquelle la couche de revêtement présente une épaisseur comprise entre 70 µm et 120 µm.

3. Feuille d'électrode positive composite selon l'une quelconque des revendications 1 à 2, dans laquelle la couche de revêtement présente une taille moyenne de particules Dv50 comprise entre 0,6 µm et 0,8 µm, et les inserts présentent une taille moyenne de particules Dv50 comprise entre 1,1 µm et 1,3 µm.

4. Feuille d'électrode positive composite selon l'une quelconque des revendications 1 à 3, dans laquelle les inserts ont une largeur D dans un sens de la longueur de la feuille d'électrode positive composite comprise entre 14 µm et 18 µm.

5. Feuille d'électrode positive composite selon l'une quelconque des revendications 1 à 4, dans laquelle les inserts ont une largeur D dans un sens de la longueur de la feuille d'électrode positive composite d'environ 16 µm.

6. Feuille d'électrode positive composite selon l'une quelconque des revendications 1 à 5, dans laquelle la distance L entre deux inserts adjacents est inférieure ou égale à 30 µm.

7. Feuille d'électrode positive composite selon l'une quelconque des revendications 1 à 6, dans laquelle la profondeur h de la partie de chaque insert insérée dans la couche de revêtement est d'environ 45 µm, en prenant comme plan de référence la surface extérieure de la couche de revêtement opposée au collecteur de courant.

8. Procédé de préparation de la feuille d'électrode positive composite selon l'une quelconque des revendications 1 à 7, **caractérisé en ce que** le procédé comprend les étapes consistant à :
(1) la préparation d'une couche de revêtement: appliquer une première suspension d'électrode positive sur une surface d'un collecteur de courant pour former une couche de revêtement ; et
(2) la préparation des inserts: injecter une deuxième suspension d'électrode positive dans la couche de revêtement à l'aide d'une seringue ;
la deuxième suspension d'électrode positive ayant une taille de particules supérieure à celle de la première suspension d'électrode positive.

9. Procédé selon la revendication 8, comprenant en outre une étape de post-traitement, dans lequel l'étape de post-traitement comprend le pressage de la feuille d'électrode positive composite obtenue à l'étape (2) sur une presse, de sorte que la densité après compactage soit supérieure ou égale à 2,3 g / cm³.

10. Procédé selon la revendication 8 ou 9, dans lequel les extrémités des inserts opposées au collecteur de courant forment des saillies sur la surface de la surface extérieure de la couche de revêtement opposée au collecteur de courant.

11. Dispositif de stockage d'énergie, **caractérisé en ce que** le dispositif de stockage d'énergie comprend la feuille d'électrode positive composite selon l'une quelconque des revendications 1 à 7.
